Europäisches Patentamt

European Patent Office

Office européen des brevets

(11) Publication number: **0 405 872 A1**

# EUROPEAN PATENT APPLICATION

(21) Application number: 90306894.8

(22) Date of filing: 25.06.90

(51) Int. Cl.5: **C08F 212/08**

(30) Priority: 30.06.89 US 373543

(43) Date of publication of application:
**02.01.91 Bulletin 91/01**

(84) Designated Contracting States:
**BE DE FR GB IT NL**

(71) Applicant: **ARCO CHEMICAL TECHNOLOGY INC.**
**3 Christina Centre Suite 902 201 N Walnut Street**
**Wilmington Delaware 19801(US)**

(72) Inventor: **Yang, Lau Shan**
**2604 North Gate Road**
**Willington, Delaware 19810(US)**

(74) Representative: **Cropp, John Anthony David et al**
**MATHYS & SQUIRE 10 Fleet Streeteet**
**London, EC4Y 1AY(GB)**

(54) Suspension polymerization of styrene and methacrylic acid.

(57) The invention provides a process for the suspension copolymerization of styrene and methacrylic acid. The copolymerization is conducted in the presence of a water-soluble inorganic salt such as an alkali metal halide or sulfate to improve the stability of the disperse phase and to control the viscosity of the copolymerization mixture. The process is particularly suitable for use at low water:monomer ratios.

The thermoplastic copolymer beads produced are suitable for foaming or other molding applications.

EP 0 405 872 A1

## SUSPENSION POLYMERIZATION OF STYRENE AND METHACRYLIC ACID

This invention relates to a process for the preparation of useful thermoplastic resins in bead form by suspension copolymerization. More particularly, the invention provides a method for stabilizing a styrene/methacrylic acid copolymerization mixture dispersed in a continuous aqueous phase. The enhanced stability made possible by the process of this invention permits the copolymerization to be carried out using an advantageously low water:monomer ratio.

## BACKGROUND OF THE INVENTION

Copolymers of styrene and methacrylic acid are thermoplastics known to possess a number of useful properties, including good dimensional stability and processability. Articles molded from such copolymers display good resistance to hot water and are able to withstand steam pasteurization. The heat resistance of the copolymers is much greater than that of polystyrene. Furthermore, the heat distortion temperature may be controlled as desired by varying the methacrylic acid content. Styrene/methacrylic acid copolymers have excellent clarity and high chemical resistance, especially to oil. Because of their desirable combination of properties, styrene/methacrylic acid. copolymers are ideal for use in appliances, electrical equipment housing, microwave food containers, automotive parts, medical equipment, packaging, and optical parts.

A number of different processes for the preparation of styrene/methacrylic acid copolymers have been described in the prior art, including bulk or solution polymerization (as taught in U.S. Pat. Nos. 3,035,033 and 4,275,182, for example).

One type of process which has been found to be particularly well-suited for styrene/methacrylic acid copolymerization is suspension polymerization, in which monomers initially suspended in water as liquid droplets are converted to solid copolymer beads. One of the primary advantages of a suspension polymerization is that temperature control is relatively simple due to the ability of the water phase to dissipate the heat of reaction and the low viscosity of the polymer suspension.

US. Pat. No. 3,839,308 teaches a suspension polymerization process in which the methacrylic acid is continuously introduced until 50% conversion of the styrene monomer is achieved. According to the teachings of this patent, copolymers substantially homogeneous in character and having high heat distortion temperature and tensile strength may be obtained.

U.S. Pat. No. 4,631,307 teaches the preparation of rubber-modified styrene/methacrylic acid copolymers using either emulsion polymerization in combination with a coagulation step or bulk polymerization followed by suspension polymerization.

Jpn. Pat. No. 61-252209 teaches a suspension polymerization process in which the methacrylic acid is added during the initial stage of polymerization. The suspension preferably contains an emulsion polymerization inhibitor to reduce the formation of unrecoverable finely powdered copolymer. Higher water/monomer ratios were found to yield products having superior physical properties.

Jpn. Pat. No. 60-248708 teaches polymerization of styrene and methacrylic acid using a free radical initiator. The monomers are partially polymerized in bulk, and then treated with water and partially saponified polyvinyl acetate to create a suspension polymerization system.

U.S. Pat. No. 4,385,156 discloses a suspension polymerization process for producing coated styrenic polymer beads wherein styrene and methacrylic acid are copolymerized in the presence of "seed" beads which form the core of the coated beads.

In a suspension polymerization, it is generally advantageous to minimize the aqueous phase:monomer ratio in order to maximize the yield of polymer produced per batch. However, lowering the proportion of water relative to monomer typically decreases the stability of the dispersed polymer/monomer organic phase during polymerization. To keep the polymerization mixture readily stirrable and to obtain an end-product in the form of free-flowing beads, the dispersed droplets containing monomer and polymer must not agglomerate or coalesce to any significant extent. When styrene and methacrylic acid are copolymerized, a stable polymerization dispersion is difficult to maintain at aqueous phase:monomer ratios less than about 2:1 using conventional suspending agents such as calcium phosphate and poly(vinyl alcohol). The stability problem is particularly acute when the methacrylic acid content in the copolymer is greater than about 10 weight percent. This lack of stability is believed to be due to the emulsifying effect of the carboxylic acid group of methacrylic acid. At low aqueous phase:monomer ratios, non-fluid emulsions are produced as a result of the extremely fine droplets formed.

The suspension polymerization of styrene and methacrylic acid is additionally complicated by the

2

solubility of methacrylic acid in water. Polymerization of the methacrylic acid can therefore take place in both the water phase and the suspended organic phase. Since styrene is essentially water insoluble, the methacrylic acid/styrene ratio in the final copolymer product obtained may be significantly less than the ratio of monomers charged. The homopolymer of methacrylic acid which tends to form in the aqueous phase presents a disposal problem and often results in the generation of foam.

It is apparent there exists a need for an improved suspension process for the copolymerization of styrene and methacrylic acid which will allow the copolymerization to be conducted at low water:monomer ratios while yielding copolymer beads having satisfactory physical form and properties.

## SUMMARY OF THE INVENTION

This invention provides a process for producing beads of styrene/methacrylic acid copolymer by suspension polymerization. The first step of the process comprises reacting styrene and methacrylic acid as a disperse phase suspended in an aqueous continuous phase in the presence of a free radical polymerization initiator, a suspending agent, and a water soluble inorganic salt. The amount of water soluble inorganic salt present is sufficient to improve the stability of the disperse phase relative to the stability of the disperse phase in the absence of the water soluble inorganic salt. The time and temperature of reaction and the amount of free radical polymerization initiator are sufficient to form solid beads of the styrene/methacrylic acid copolymer. The beads of copolymer are then separated from the aqueous continuous phase.

Since the process of this invention enables the use of low water:monomer ratios, the per batch productivity of a styrene/methacrylic acid copolymerization can thus be improved relative to prior art processes. Smaller quantities of waste water per pound of copolymer product are generated, minimizing the costs and problems associated with disposing of or recycling the waste water.

A further advantage of the process of this invention is that the composition of the copolymer obtained is very close to that of the monomer mixture initially charged, thus permitting precise control of copolymer properties and minimizing loss of the methacrylic acid.

Molded articles obtained by molding the solid beads of copolymer produced by this process exhibit physical properties, including heat distortion resistance and low moisture absorbance, at least equivalent to those exhibited by comparable copolymers produced by prior art processes.

## DETAILED DESCRIPTION OF THE INVENTION

The copolymer produced in accordance with the process of this invention is comprised of styrene and methacrylic acid. Although the relative proportions of these monomers is not critical, preferably from about 60 to 99 weight percent of styrene and from about 1 to 40 weight percent of methacrylic acid are present. Most preferably, the copolymer is comprised of from about 70 to 90 weight percent of styrene and from 10 to 30 percent of methacrylic acid. The glass transition temperature of the copolymer may be readily varied as desired by changing the methacrylic acid content. The copolymer is substantially random in structure; that is, it does not contain any "blocks" or segments in which a large number of one type of monomer unit are exclusively present. The number average molecular weight of the copolymer may be from about 10,000 to 1,000,000; most typically, the number average molecular weight is between about 30,000 and 100,000. The molecular weight may be controlled, if desired, by adding during copolymerization one or more of the chain transfer agents well-known in the free radical polymerization art.

In addition to styrene, other mono-vinyl aromatic monomers may be used in the process of this invention. These other mono-vinyl aromatic monomers should be capable of being polymerized by free radical means and are preferably substantially insoluble in water. Such compounds include, for example, p-methyl styrene, m-ethyl styrene, p-tert-butyl styrene, p-chloro styrene, alpha-methyl styrene, and vinyl naphthalene, as well as other alkyl- or halo-substituted styrenes. Mixtures of mono-vinyl aromatic monomers may also be employed. Minor amounts of other ethylenically unsaturated copolymerizable monomers may also be employed, including unsaturated nitriles such as acrylonitrile.

Other $\alpha,\beta$-unsaturated carboxylic acid moieties may be used in minor amounts in addition to the methacrylic acid in the process of this invention. Acrylic acid and $\alpha,\beta$-unsaturated carboxylic acids having from 3 to 6 carbon atoms which can be polymerized by free radical means are preferred examples of other suitable $\alpha,\beta$-unsaturated carboxylic acid moieties. Acrylate esters such as methyl methacrylate may also be used. The $\alpha,\beta$-unsaturated carboxylic acid moiety should be substantially soluble in styrene at the

3

polymerization temperature.

In the process of this invention, styrene, methacrylic acid, a water-soluble inorganic salt, a suspending agent, and water are combined in a reactor capable of being stirred, heated, and cooled. The reactor may be of any type generally suitable for use in a suspension polymerization process. The mixture is stirred and heated at a suitable temperature in the presence of a free radical polymerization initiator. In one embodiment of this invention, the water-soluble inorganic salt is added after polymerization has been initiated.

Without wishing to limit by theory the scope of this invention, it is thought that the presence of the water-soluble inorganic salt helps to improve the stability of the disperse organic phase by counteracting the tendency of the carboxylic acid to act as an emulsifier. The beneficial results obtained by the use of the water-soluble inorganic salt were completely unexpected, as suspension polymerizations are generally performed using water which has been carefully purified to remove dissolved salts. It is well known from other suspension polymerization processes that the presence of ionic substances can result in inhibition of polymerization, contamination of the polymer product, or an undesired reduction in the average size of the dispersed particles [see "Suspension Polymerization" in Encyclopedia of Polymer Technology Vol. 13, p. 553 (last full paragraph) and p. 564 (sixth paragraph)].

The particular water-soluble inorganic salt employed is not critical, although it is important that the salt does not interfere with the polymerization or adversely affect the properties of the polymer product. Suitable water-soluble inorganic salts include, but are not limited to, alkali metal and alkaline earth halides such as sodium chloride, sodium bromide, potassium chloride, potassium bromide, magnesium chloride, and calcium chloride, alkali metal or alkaline earth sulfates such as sodium sulfate, potassium sulfate, and magnesium sulfate, and alkali metal or alkaline earth nitrates such as sodium nitrate and potassium nitrate. Mixtures of these or other water-soluble inorganic salts may be used.

The concentration of water-soluble inorganic salt should be sufficient to effectively improve the stability of the disperse phase relative to the stability of the disperse phase in the ab sence of water-soluble inorganic salt. This amount will vary depending on the aqueous phase:monomer ratio, the styrene:methacrylic acid ratio, the type and concentration of the suspending agent, the agitation rate, as well as other reaction parameters, but is preferably from about 0.5 to 5 percent (most preferably, from about 1 to 2 weight percent) by weight of the aqueous phase. Too high a concentration of salt can interfere with the effectiveness of the suspending agent, while too low a concentration may not significantly improve the disperse phase stability or lower the viscosity of the mixture sufficiently.

The suspending agent to be used in the process of this invention may be any of the substances capable of stabilizing suspension polymerizations. Examples of suitable suspending agents include finely divided water-insoluble inorganic substances such as alkaline earth phosphates, talc, barium sulfate, magnesium hydroxide, aluminum hydroxide, bentonite, limestone, alumina, magnesium carbonate, kaolin, hydroxy apatite, titanium dioxide, zinc sulfide, calcium oxalate, and zinc oxide as well as water soluble organic polymers such as polyvinyl alcohol, partially saponified poly(vinyl acetate), methyl cellulose, gelatin, hydroxy ethyl cellulose, carboxymethyl cellulose, salts of poly(acrylic acid) and poly(methacrylic acid), pectin, starch, alginates, gum accacia, poly(vinyl pyrrolidinone), salts of sulfonated polystyrene, amino polyacetic acids, and mixtures thereof. Mixtures of poly(vinyl alcohol) and tricalcium phosphate are preferably employed. An example of a suitable poly(vinyl alcohol) is VINOL® 540, a product of Air Products and Chemicals. Sufficient suspending agent should be present in combination with the water-soluble inorganic salt to effectively stabilize the styrene/methacrylic acid copolymerization suspension. Typically, from about 0.01 to 0.25 weight percent of a water-soluble organic polymer such as polyvinyl alcohol and from about 0.1 to 2.0 weight percent of a finely divided water-insoluble inorganic substance such as tricalcium phosphate, based on total weight of the polymerization mixture, are used.

The weight ratio of water:monomer (styrene plus methacrylic acid) initially charged to the reactor is not critical. However, one of the primary advantages of the process of this, invention is that relatively low water:monomer ratios may be employed. Thus, to maximize productivity, the water:monomer ratio should generally be less than about 2:1 and most preferably is about 1:1 or less. At ratios less than about 0.75:1, maintaining the stability of the disperse phase becomes increasingly difficult.

The free radical polymerization initiators usable in the process of this invention may be any of the water-insoluble initiators well known in the suspension polymerization art such as organic peroxides, peresters, perketals and percarbonates. Benzoyl peroxide is a preferred initiator. A mixture of free radical polymerization initiators may also be advantageously used; mixtures of a low temperature and a high temperature initiator have been found to be particularly effective. Examples of low temperature initiators include organic peroxides such as ben zoyl peroxide, caproyl peroxide, lauroyl peroxide, t-butyl peroctoate, cyclohexanone peroxide, and decanoyl peroxide, as well as other initiators such as azo-bis-isobutyronitrile (AIBN). The high temperature initiators can be, for example, t-butyl peracetate, t-butylperbenzoate, or t-butyl peroxy isopropyl carbonate. The amount of low temperature initiator can preferably vary from about 0.03 to 1.0%, most preferably from about 0.08 to 0.25%, by weight based on total weight of the monomers. The high temperature initiator can be employed in amounts varying from about 0.01 to 0.25%, preferably 0.05 to 0.15%, by weight based on total weight of the monomers. In any case, sufficient initiator should be present to polymerize most (preferably, over 90%) of the methacrylic acid and styrene under the reaction conditions employed.

The suspension polymerization mixture containing a disperse organic phase and a continuous aqueous phase is heated with stirring at a temperature effective to accomplish copolymerization of the monomers. Temperatures of from about 60°C to 125°C are generally suitable, although it may be desirable to initiate polymerization at a relatively low temperature (80-95°C, for example) and then increase the temperature to over 100°C to achieve more complete monomer conversion. It is preferred, however, that the highest temperature not exceed the glass transition temperature of the copolymer so that the suspended beads do not soften and agglomerate.

The degree of agitation employed will vary depending on the other reaction conditions and components, but should be sufficient to keep the copolymer and monomers in suspension without agglomeration and without forming an emulsion of very fine particles. The agitation rate may be adjusted as desired to control the bead size of the copolymer product.

Preferably, the suspension polymerization of this invention is performed in a batch-wise fashion in which the monomers and other reaction components are charged to the reactor before polymerization is initiated. However, it may be desirable to initiate polymerization with only a portion of one monomer present and then add the remainder of that monomer continuously to the reaction mixture. Similarly, all or part of the water-soluble inorganic salt or suspending agent may be added after polymerization has begun. Such variations in combining the reaction components are considered to be within the scope of this invention.

The copolymerization is continued until substantially complete reaction of the monomers has been achieved and the disperse phase is comprised of relatively hard, solid beads of styrene/methacrylic acid copolymer. The slurry of solid beads may then be treated to separate the beads from the aqueous phase. Methods such as filtration, centrifugation, or decantation are suitable for this purpose. The separated beads may be washed with water or other suitable solvent to remove residual impurities on the surface of the beads. The beads can be dried by any suitable method to remove water, residual unreacted monomer, and other volatile residues.

The solid beads of copolymer produced in accordance with the process of this invention can be molded into useful articles by any suitable molding method, including injection molding, blow molding, and extrusion molding. The beads may be molded directly or pelletized into larger beads before molding. Polymer blends and alloys may be obtained by blending the copolymer beads with other thermoplastic resins. The copolymer may be blended with elastomers such as polybutadiene or styrene/butadiene block or random copolymers to provide impact-modified products having reduced brittleness. It may be advantageous to incorporate additives such as lubricants, pigments, fillers, plasticizers, reinforcing fillers, and stabilizers into the copolymer beads.

In one embodiment of this invention, the copolymer beads are impregnated with one or more blowing agents such as pentane, methylene chloride, carbon dioxide, or a fluorocarbon. The impregnation may be accomplished by any of the methods generally suitable for impregnating thermoplastic beads. For example, the copolymer beads may be suspended in an aqueous medium together with the blowing agent and impregnated at elevated temperature and pressure. The impregnated beads, once recovered from the aqueous medium, are then shaped into molded articles by heating. The beads expand and fuse together to form the molded article. Such methods are described in Ingram et al "Polystyrene and Related Thermoplastic Foams" Plastic Foams Marcel Dekker (1973), Part II, Chapter 10, pp. 531-581 and Ingram "Expandable Polystyrene Process" Addition and Condensation Polymerization Processes American Chemical Society (196a), Chapter 33, pp. 531-535. The teachings of these references are incorporated herein in their entirety.

Without further elaboration, it is believed that one skilled in the art can, using the preceding description, utilize the present invention to its fullest extent. The following examples, therefore, are to be considered as merely illustrative and not limitative of the claims or remainder of the disclosure in any way whatsoever.


EXAMPLE 1-3


These examples demonstrate the suspension copolymerization of styrene and methacrylic acid using a water:monomer ratio of 1:1 and sodium sulfate as the water soluble inorganic salt. The methacrylic acid:styrene ratio was varied from 10:90 to 20:80.

A 4 liter resin reactor was charged in each run with the components listed in Table I. The mixtures were heated about 6 hours at 85-90°C while agitated at 650 rpm using a 3.5 inch impeller. In each case, suspension stability and low viscosity were maintained without difficulty. When copolymerization was completed, the copolymer beads produced were collected on a sieve, washed with 0.1% HCl aqueous solution and then water, and dried. Table I gives the yield and glass transition temperature (determined by DSC) of the product obtained in each example.

## EXAMPLE 4

This example illustrates a method of determining a suitable concentration of water-soluble inorganic salt to be used in the process of this invention. The example also shows that the water-soluble inorganic salt may be added to the reaction mixture after polymerization has been initiated.

A resin reactor was charged with water (1000g), tricalcium phosphate (20g), polyvinyl alcohol (1.5g), styrene (850g), methacrylic acid (150g, giving a methacrylic acid:styrene ratio of 15:85), and benzoyl peroxide (3g). The water:monomer ratio was thus 1:1. The mixture was heated with agitation at 85-90°C. Initially, the mixture was milky white in appearance and was low in viscosity. After about 30 minutes, the viscosity had increased significantly and the liquid at the top of the mixture had nearly stopped moving. This illustrates the problems associated with a suspension copolymerization performed at a low water:monomer ratio in the absence of a water-soluble inorganic salt. Slow addition of a 20% sodium chloride solution in water was then begun. When about 50 mL of the salt solution had been added (corresponding to a sodium chloride concentration in the aqueous phase of about 1%), the viscosity dropped to approximately the viscosity of the mixture at the beginning of the polymerization and a suitably fluid and stirrable suspension was formed. The copolymerization was then carried to completion and the copolymer beads recovered as described in Examples 1-3.

## EXAMPLE 5

The preparation of a 15/85 methacrylic acid/styrene copolymer using a water:monomer ratio of only 0.82:1 is shown by this example.

A 4 liter cylindrical resin reactor (5.5 inch diameter) equipped with a condenser, two 3/4 x 10 inch baffles, and a mechanical stirrer with two 3.5 inch 4 x 45° impellers was charged with the following components.

|  | Weight, g |
| --- | --- |
| Styrene | 1215 |
| Methacrylic Acid | 215 |
| Benzoyl Peroxide | 5 |
| Water | 1170 |
| Polyvinyl Alcohol | 2.9 |
| Sodium Sulfate | 18 |
| Tricalcium Phosphate | 20 |

The reaction temperature was maintained at 88°C (±1°C) while stirring the mixture at 650 rpm. After 1 hour of heating, 20g of a 5% aqueous solution of polyvinyl alcohol was added. A defoaming agent (ca.4 mL of Half and Half) was added after about 1.5 hours to eliminate a small amount of foam which had developed. The reaction was continued for an additional 5 hours to give 1370g (95% yield) of copolymer beads having a Tg of 138°C.

## EXAMPLES 6-12

These examples show the effect of varying the relative proportions of the suspending agent and the water-soluble inorganic salt on suspension stability. The copolymerizations were carried out using a methacrylic acid:styrene ratio of 15:85 and a water:monomer ratio of 1:1. The concentrations of the suspending agent(s) and salt are given in Table II.

TABLE I

| Example No. | 1 | 2 | 3 |
|---|---|---|---|
| Styrene, g | 900 | 1105 | 800 |
| Methacrylic Acid, g | 100 | 195 | 200 |
| Methacrylic Acid:Styrene | 10:90 | 15:85 | 20:90 |
| Benzoyl Peroxide, g | 3.5 | 4.5 | 3.0 |
| Water, g | 1000 | 1300 | 1000 |
| Polyvinyl Alcohol, g | 2.0 | 1.5 | 1.5 |
| Sodium Sulfate, g | 15 | 26 | 20 |
| Tricalcium Phosphate, g | 20 | 15 | 20 |
| Yield, g | 950 | 1250 | 930 |
| Yield, % | 95 | 96 | 93 |
| Tg ($^\circ$C) | 129 | 139 | 148 |

TABLE II

| Example No. | TCP[1] | PVOH[2] | SALT[3] | Suspension Stability |
|---|---|---|---|---|
| 6 | 2.0 | 0.11 | 1.1 | Stable |
| 7 | 1.0 | 0.11 | 1.5 | Stable |
| 8 | 0.5 | 0.11 | 1.5 | Stable |
| 9 | 2.0 | 0.15 | 2 | Stable |
| 10 | 2.0 | 0.05 | 1.5 | Instable |
| 11 | 2.0 | 0.05 | 1.0 | Instable |
| 12 | 2.0 | 0 | 1.5 | Instable |

[1] Tricalcium Phosphate, wt. % of the aqueous phase
[2] Polyvinyl Alcohol, wt. % of the aqueous phase
[3] Sodium Sulfate, wt. % of the aqueous phase

## Claims

1. A process for producing beads of a styrene/methacrylic acid copolymer by suspension polymerization comprising:

(A) reacting styrene and methacrylic acid as a disperse phase suspended in an aqueous continuous phase in the presence of

(i) a free radical polymerization initiator;

(ii) a suspending agent; and

(iii) a water-soluble inorganic salt;

wherein (a) the amount of water-soluble inorganic salt present is sufficient to improve the stability of the disperse phase relative to the stability of the disperse phase in the absence of the water-soluble inorganic salt (b) and the time and temperature of reaction and the amount of free radical polymerization initiator are sufficient to form solid beads of a styrene/methacrylic acid copolymer; and

(B) separating the solid beads of styrene/methacrylic acid copolymer from the aqueous continuous phase.

2. The process of claim 1 wherein the weight ratio of the aqueous continuous phase to the total weight of styrene and methacrylic acid is less than about 2:1.

3. The process of claim 1 or claim 2 wherein the water-soluble inorganic salt is selected from alkalimetal halides, alkaline earth halides, alkali metal sulfates, alkaline earth sulfates, alkali metal nitrates, alkaline earth nitrates, and mixtures thereof.

4. The process of claim 1 or claim 2 wherein the water-soluble inorganic salt is selected from sodium chloride, sodium sulfate, potassium chloride, potassium sulfate, and mixtures thereof.

5. The process of any one of claims 1 to 4 wherein the water-soluble inorganic salt is present in an amount of from about 0.5 to 5 percent of the weight of the aqueous continuous phase.

6. The process of any one of claims 1 to 5 wherein the suspending agent is selected from water-soluble organic polymers, finely divided water-insoluble inorganic substances, and mixtures thereof.

7. The process of any one of claims 1 to 5 wherein the suspending agent is selected from poly (vinyl alcohol), alkaline earth phosphates, and mixtures thereof.

8. The process of any one of claims 1 to 7 comprising the further steps after step (B) of washing and drying the styrene/methacrylic acid copolymer beads.

9. The process of any one of claims 1 to 8 wherein said separation step (B) is accomplished by filtering, decanting, or centrifuging.

10. The process of any one of claims 1 to 9 wherein the weight ratio of methacrylic acid:styrene is from about 10:90 to 30:70.

11. The process of any one of claims 1 to 10 comprising the further step after step (A) of impregnating the styrene/methacrylic acid copolymer beads with a blowing agent.

12. The process of any one of claims 1 to 11 wherein the water-soluble inorganic salt is added to the aqueous continuous phase after polymerization has been initiated.

13. The process of any one of claims 1 to 12 wherein the temperature during step (A) is from about 60 to 125°C.

14. The process of any one of claims 1 to 13 wherein the suspending agent comprises a mixture of from about 0.01 to 0.25 weight percent of a water-soluble organic polymer and from about 0.1 to 2.0 weight percent of a finely divided water-insoluble inorganic substance based on the combined weight of water, styrene, and methacrylic acid.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 172 421 (MONSANTO) <br> * Claim 1; page 3, lines 15-20 * | 1-14 | C 08 F 212/08 |

TECHNICAL FIELDS SEARCHED (Int. Cl.5)

C 08 F

The present search report has been drawn up for all claims

| Place of search | Date of completion of the search | Examiner |
|---|---|---|
| THE HAGUE | 10-10-1990 | CAUWENBERG C.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)